# EUROPÄISCHE PATENTSCHRIFT

(11) **EP 2 136 095 B1**
(45) Veröffentlichungstag und Bekanntmachung des Hinweises auf die Patenterteilung: **17.08.2011**
(21) Anmeldenummer: 08011227.9
(22) Anmeldetag: 20.06.2008
(51) Int. Cl.: F16D 7/04, F16D 43/202

(54) **Kupplung zur Drehmomentbegrenzung**
Coupling for limiting rotational movement
Couplage destiné à la limitation du couple

(43) Veröffentlichungstag der Anmeldung: 23.12.2009
(73) Patentinhaber: GKN Walterscheid GmbH, 53797 Lohmar (DE)
(72) Erfinder: Kämpf, Klaus, Dipl.-Ing., 53797 Lohmar (DE)
(74) Vertreter: Müller, Thomas Michael

(56) Entgegenhaltungen:
- EP-A- 0 733 820
- EP-A- 0 870 945
- EP-A- 1 072 813
- DE-A1- 3 001 566
- DE-A1- 10 348 068
- DE-C1- 3 205 513

## Beschreibung

Die Erfindung betrifft eine Kupplung zur Drehmomentbegrenzung, insbesondere im Antriebsstrang zum Antreiben landwirtschaftlicher Geräte, umfassend
eine Kupplungsnabe,
eine Kupplungshülse, die um die Kupplungsnabe drehbar angeordnet ist und eine Innenumfangsfläche aufweist, wobei die Kupplungsnabe und die Kupplungshülse um eine Drehachse drehbar sind,
Mitnehmer, die in der Kupplungsnabe jeweils entlang einer Mitnehmerachse zwischen einer Drehmomentübertragungsposition und einer Abschaltposition quer zur Drehachse verstellbar sind, und die jeweils eine erste Sperrfläche und eine zweite Sperrfläche aufweisen,
Ausnehmungen in der Innenumfangsfläche der Kupplungshülse, in welche die Mitnehmer in ihrer Drehmomentübertragungsposition eingreifen, sowie Stellmittel, die die Mitnehmer zur Einnahme ihrer Drehmomentübertragungsposition mit Kraft beaufschlagen, und die jeweils eine erste Sperrgegenfläche und eine zweite Sperrgegenfläche aufweisen, wobei in der Drehmomentübertragungsposition der Mitnehmer zur Drehmomentübertragung in einer ersten Drehrichtung jeweils die erste Sperrfläche gegen die erste Sperrgegenfläche und zur Drehmomentübertragung in einer zweiten Drehrichtung jeweils die zweite Sperrfläche gegen die zweite Sperrgegenfläche abgestützt ist.

Eine solche Kupplung ist aus der DE 32 05 513 C1 und der EP 0 870 945 bekannt.

Eine ähnliche Kupplung ist aus der DE 103 48 068 A1 bekannt. Die dort beschriebene Kupplung ist nur in einer Drehrichtung wirksam, kann also in einer Drehrichtung bei Überschreiten eines vorgegebenen Drehmoments abschalten. In der anderen Drehrichtung ist eine feste Kopplung zwischen Kupplungsnabe und Kupplungshülse gegeben. Die Mitnehmer sind hierzu entlang jeweils einer Mitnehmerachse verstellbar in der Kupplungsnabe geführt. Die ersten Sperrflächen sind zu den jeweiligen Mitnehmerachsen in einem größeren Winkel angeordnet als die zweiten Sperrflächen, wobei in der ersten Drehrichtung die Stellmittel bei Überschreiten eines vorbestimmten Drehmoments eine Überführen der Mitnehmer in ihre Abschaltposition zulassen. Der Winkel zwischen der zweiten Sperrfläche und der jeweiligen Mitnehmerachse ist derart gering, dass die Kupplung in der zweiten Drehrichtung nicht abgeschaltet wird. In der ersten Drehrichtung betrachtet hinter den Ausnehmungen sind jeweils Fasen vorgesehen, die bewirken, dass die Kupplung nach Überführen der Mitnehmer in die Abschaltposition bei einer definierten Wiedereinschaltdrehzahl einschaltet. Die Mitnehmer werden von den Stellmitteln zur Einnahme ihrer Drehmomentübertragungsposition mit Kraft beaufschlagt und benötigen für die Verstellung von der Abschaltposition in die Drehmomentübertragungsposition eine vorgegebene Zeitspanne. Wenn in der ersten Drehrichtung die Drehzahl über der Wiedereinschaltdrehzahl liegt, haben sich die Mitnehmer beim Überstreichen beziehungsweise Passieren einer Ausnehmung lediglich über einen so geringen Radialweg ausgehend von der Abschaltposition nach außen bewegt, dass die Mitnehmer nach dem Passieren der Ausnehmung auf die Fase treffen. Die Mitnehmer gleiten dann auf der Fase ab und werden wieder von dieser zurück in ihre Abschaltposition überführt. Bei Unterschreiten der Wiedereinschaltdrehzahl haben die Mitnehmer genügend Zeit, um tiefer in die jeweilige Ausnehmung einzugreifen, so dass die jeweilige erste Sperrfläche mit der jeweiligen ersten Sperrgegenfläche in Anlage gerät und die Mitnehmer nicht wieder aus der Ausnehmung gedrückt werden sondern tiefer in diese eingreifen können. Hierzu ist es erforderlich, dass im Übergang von der Innenfläche zur Ausnehmung in der ersten Drehrichtung betrachtet vor der Ausnehmung die Innenfläche umgehend in die Ausnehmung übergeht und nach der Ausnehmung die Fase vorgesehen ist, so dass der Mitnehmer zunächst gegen die Innenumfangsfläche der Kupplungshülse abgestützt ist und beim Verlassen der Innenumfangsfläche und Passieren der Ausnehmung einen Radialweg vollziehen kann und bei einer Drehzahl über der Wiedereinschaltdrehzahl auf die Fase trifft.

Aufgabe der vorliegenden Erfindung ist es, eine Kupplung zur Drehmomentbegrenzung bereitzustellen, die in beide Drehrichtungen wirksam ist und entsprechend in beiden Drehrichtungen eine Drehmomentbegrenzungsfunktion aufweist.

Erfindungsgemäß wird die Aufgabe durch eine Kupplung mit den Merkmalen des Anspruchs 1 gelöst.

Somit wird jeweils durch eine Flächenpaarung eine Ratschenfläche am Mitnehmer und eine Ratschengegenfläche an der Ausnehmung gewährleistet, dass in beiden möglichen Drehrichtungen bei abgeschalteter Kupplung und bei einer Relativdrehzahl über einer Wiedereinschaltdrehzahl eine Wiedereinschalten der Kupplung verhindert wird.

Ferner sind definierte Flächenpaarungen jeweils einer ersten Sperrfläche und einer ersten Sperrgegenfläche sowie einer zweiten Sperrfläche und einer zweiten Sperrgegenfläche vorgesehen, die in beiden Drehrichtungen eine Drehmomentübertragung gewährleisten.

Vorzugsweise ist vorgesehen, dass die Mitnehmer jeweils eine erste Ratschenfläche und die Ausnehmungen jeweils eine erste Ratschengegenfläche aufweisen, die bei abgeschalteter Kupplung in einer ersten Drehrichtung der Kupplungsnabe relativ zur Kupplungshülse mit einer Relativdrehzahl über einer Wiedereinschaltdrehzahl derart zusammenwirken, dass ein Überführen des jeweiligen Mitnehmers in die Drehmomentübertragungsposition verhindert wird, und dass die Mitnehmer jeweils eine zweite Ratschenfläche und die Ausnehmungen jeweils eine zweite Ratschengegenfläche aufweisen, die bei abgeschalteter Kupplung in einer zweiten Drehrichtung der Kupplungsnabe relativ zur Kupplungshülse mit einer Relativdrehzahl über einer Wiedereinschaltdrehzahl derart zusammenwirken, dass ein Überführen des jeweiligen Mitnehmers in die Drehmomentübertragungsposition verhindert wird.

Somit ist die Kupplung derart gestaltet, dass in einer Ratschenposition der Mitnehmer, die sich zwischen der Drehmomentübertragungsposition und der Abschaltposition befindet, in der ersten Drehrichtung jeweils die erste Ratschenfläche gegen die erste Ratschengegenfläche der jeweiligen Ausnehmung und in der zweiten Drehrichtung jeweils die zweite Ratschenfläche gegen die zweite Ratschengegenfläche zusammenwirken und ein weiteres Durchrutschen der Kupplung, also eine Drehbewegung der Kupplungsnabe relativ zur Kupplungshülse, gewährleisteen.

Die Mitnehmer befinden sich somit in ihrer Abschaltposition in einer Position, in der diese nicht in die Ausnehmungen eingreifen, sondern gegen die Innenumfangsfläche der Kupplungshülse nach außen abgestützt sind. Ist die Relativdrehzahl zwischen Kupplungsnabe und Kupplungshülse höher als eine vorbestimmte Wiedereinschaltdrehzahl, passieren die Mitnehmer die Ausnehmungen in einer derart kurzen Zeit, dass diese nicht ausreichend tief in eine Ausnehmung eingreifen können, um zu erreichen, dass die Sperrflächen mit den Sperrgegenflächen in Anlage kommen können. Vielmehr rücken die Mitnehmer lediglich teilweise in die Ausnehmungen ein, wobei die Ratschenflächen in Anlage zu den Ratschengegenflächen gelangen. Hierbei befinden sich die Mitnehmer in einer Ratschenposition, von der aus aufgrund des Abgleitens der Ratschenflächen auf den Ratschengegenflächen die Mitnehmer zurück in ihre Abschaltposition gedrängt werden. Als Ratschenposition kann jede Position der Mitnehmer bezeichnet werden, in der die Mitnehmer lediglich derart tief in eine Ausnehmung eingerückt sind, bei der die Ratschenflächen in Anlage zu den Ratschengegenflächen gelangen.

Vorzugsweise sind die erste Ratschenfläche und die erste Sperrfläche der Mitnehmer jeweils winklig zueinander angeordnet und die zweite Ratschenfläche und die zweite Sperrfläche der Mitnehmer ebenfalls winklig zueinander angeordnet.

Die Mitnehmer sind in der Kupplungsnabe jeweils entlang einer Mitnehmerachse verstellbar geführt. Wenn ein Mitnehmer in jeweils eine Ausnehmung vollständig eingreift und seine Drehmomentübertragungsposition eingenommen hat, kann je Ausnehmung eine Mittelachse definiert werden, die auf der Mitnehmerachse liegt.

Bezogen auf die Mitnehmerachse sind die erste Sperrfläche und die erste Ratschenfläche jeweils eines Mitnehmers in unterschiedlichen Winkeln angeordnet. Ebenso sind die zweite Sperrfläche und die zweite Ratschenfläche jeweils eines Mitnehmers in unterschiedlichen Winkeln zur Mitnehmerachse angeordnet.

Hierbei schließen die Ratscheflächen jeweils eines Mitnehmers einen größeren Winkel mit der Mitnehmerachse ein als die Sperrflächen.

Die Sperrflächen schließen mit der Mitnehmerachse vorzugsweise einen Winkel von 15° bis 35°, vorzugsweise von 20° bis 30° ein. Die Ratschenflächen schließen mit der Mitnehmerachse einen Winkel von 35° bis 55°, vorzugsweise von 40° bis 50° ein.

Ferner sind die Ratschenflächen jeweils eines Mitnehmers vorzugsweise in einem größeren radialen Abstand zur Drehachse angeordnet als die Sperrflächen.

Wie die Ratschenflächen und die Sperrflächen sind die ersten Ratschengegenflächen und die ersten Sperrgegenflächen winklig zueinander angeordnet, genauso wie vorzugsweise die zweite Ratschengegenfläche und die zweite Sperrgegenfläche jeweils einer Ausnehmung winklig zueinander angeordnet sind.

Vorzugsweise ist die erste Sperrgegenfläche und die erste Ratschengegenfläche jeweils einer Ausnehmung in unterschiedlichen Winkeln zur Mittelachse angeordnet. Ebenso sind vorzugsweise die zweite Sperrgegenfläche und die zweite Ratschengegenfläche jeweils einer Ausnehmung in unterschiedlichen Winkeln zur Mittelachse angeordnet.

Die Sperrgegenftächen schließen vorzugsweise einen Winkel von 15° bis 35°, insbesondere von 20° bis 30° mit der Mittelachse ein. Die Ratschengegenflächen schließeneinen Winkel von 35° bis 55°, vorzugsweise von 40° bis 50° mit der Mittelachse ein.

Vorzugsweise sind die Ratschengegenflächen jeweils einer Ausnehmung in einem geringeren radialen Abstand zur Drehachse angeordnet als die Sperrgegenflächen.

Um in der Drehmomentübertragungsposition der Mitnehmer jeweils einen Flächenkontakt zwischen den jeweiligen Sperrflächen und Sperrgegenflächen zu gewährleisten, kann vorgesehen sein, dass in der Drehmomentübertragungsposition der Mitnehmer die Sperrflächen und die Sperrgegenflächen jeweils einer Ausnehmung und eines in diese eingreifenden Mitnehmers parallel zueinander angeordnet sind. Somit werden in der Drehmomentübertragungsposition der Mitnehmer die Flächenpressungen möglichst gering gehalten.

Ebenso kann zur Reduzierung der Flächenpressungen zwischen den Ratschenflächen und den Ratschengegenflächen vorgesehen sein, dass in einer Position der Mitnehmer, in der eine Ratschenfläche mit einer Ratschengegenfläche in Anlage ist, diese parallel zueinander angeordnet sind.

Die Stellmittel sind derart ausgebildet, dass sie bei Überschreiten eines vorbestimmten Drehmoments zwischen der Kupplungsnabe und der Kupplungshülse ein Verstellen der Mitnehmer in ihre Abschaltposition zulassen.

Vorzugsweise ist vorgesehen, dass die Stellmittel mindestens ein Stellelement umfassen, das mit einer Stellfläche axial gegen eine Stellgegenfläche zumindest eines der Mitnehmer mit Kraft beaufschlagt ist und den mindestens einen Mitnehmer zur Einnahme seiner Drehmomentübertragungsposition beaufschlagt.

Bei einer bevorzugten Ausführung ist vorgesehen, dass die Stellmittel mindestens ein Stellelement umfassen, das mit jeweils einer Stellfläche gegen sämtliche Mitnehmer mit Kraft beaufschlagt ist.

Die Stellflächen weisen jeweils einen ersten Stellflächenabschnitt auf, der gegen einen ersten Stellgegenflächenabschnitt der Stellgegenfläche abgestützt ist, wenn sich der jeweilige Mitnehmer in seiner Drehmomentübertragungsposition befindet.

Die Stellflächen weisen ferner jeweils einen zweiten Stellflächenabschnitt auf, der gegen einen zweiten Stellgegenflächenabschnitt der Stellgegenfläche abgestützt ist, wenn sich der jeweilige Mitnehmer in seiner Abschaltposition oder in seiner Ratschenposition befindet.

Hierbei ist der erste Stellgegenflächenabschnitt jeweils eines Mitnehmers in einem größeren Winkel zu der jeweiligen Mitnehmerachse angeordnet als der zweite Stellgegenflächenabschnitt.

Somit ist gewährleistet, dass die Mitnehmer mit einer größeren Kraft in Richtung zu ihrer Drehmomentübertragungsposition beaufschlagt werden, wenn sich diese in der Drehmomentübertragungsposition oder kurz vor dieser befinden. Wenn sich die Mitnehmer in ihrer Ratschenposition oder in ihrer Abschaltposition befinden, wirkt eine geringere Kraft auf die Mitnehmer, so dass die Mitnehmer nicht so stark nach außen gedrängt werden. Dies führt dazu, dass einerseits die Mitnehmer langsamer in die Ausnehmungen gedrückt werden und somit auch bei relativ geringen Relativdrehzahlen gewährleistet ist, dass die Kupplung als Ratsche funktioniert und nicht wieder einschaltet. Zum anderen wird insbesondere in der Ratschenposition der Mitnehmer der Verschleiß reduziert, da die Ratschenflächen mit einer geringeren Kraft der Stellmittel gegeneinander beaufschlagt werden und beim Aufeinandertreffen der Ratschenflächen gegen die Ratschengegenflächen geringere Kräfte wirken.

Um Flächenpressungen an den Stellflächen und Stellgegenflächen zu reduzieren, kann vorgesehen sein, dass in der Drehmomentübertragungsposition der Mitnehmer jeweils der erste Stellflächenabschnitt parallel zum ersten Stellgegenflächenabschnitt angeordnet ist und dass in der Abschaltposition der Mitnehmer jeweils der zweite Stellflächenabschnitt parallel zum zweiten Stellgegenflächenabschnitt angeordnet ist.

Grundsätzlich können verschieden Kupplungstypen vorgesehen sein. So können Stellelemente vorgesehen sein, die jeweils auf mehrere Mitnehmer gleichzeitig wirken. Diese können insbesondere in Form eines Stellrings gestaltet sein, der in axialer Richtung bezogen auf die Drehachse gegen die Mitnehmer mit Kraft beaufschlagt wird. Hierbei können die Mitnehmer auf der von dem Stellring abgewandten Seite gegen eine Stellfläche abgestützt sein. Ferner ist es möglich, dass die Mitnehmer beidseitig von zwei Stellringen mit Kraft beaufschlagt werden.

Eine alternative Möglichkeit zur Kraftbeaufschlagung der Mitnehmer kann darin gesehen werden, dass jeweils ein Mitnehmer durch ein Stellelement mit Kraft beaufschlagt wird. Die Stellelemente können hierbei entweder parallel zur Längsachse verstellbar in der Kupplungsnabe angeordnet sein oder vorzugsweise quer zur Drehachse, wobei die Stellachsen der Stellelemente die Drehachse mit Abstand kreuzen.

Bevorzugte Ausführungsbeispiele werden im folgenden anhand der Zeichnungen näher erläutert.

Hierin zeigt
- Figur 1: einen Traktor mit angehängtem Gerät, das unter Zwischenschaltung einer erfindungsgemäßen Kupplung angetrieben wird;
- Figur 2: einen Querschnitt durch eine erfindungsgemäße Kupplung in Drehmo- mentübertragungsposition;
- Figur 3: einen Längsschnitt der Kupplung gemäß Figur 2 entlang der Schnittlinie III - III;
- Figur 4: einen vergrößerten Querschnitt des Ausschnitts IV gemäß Figur 2 eines Kopfabschnitts eines Mitnehmers;
- Figur 5: einen vergrößerten Längsschnitt des Ausschnitts V gemäß Figur 3 der Stellmittel;
- Figur 6: einen vergrößerten Querschnitt gemäß Figur 4, wobei sich der Mitnehmer in seiner Abschaltposition befindet;
- Figur 7: einen vergrößerten Längsschnitt gemäß Figur 5, wobei sich der Mitneh- mer in seiner Abschaltposition befindet;
- Figur 8: einen vergrößerten Querschnitt gemäß Figur 4, wobei sich der Mitnehmer in seiner Ratschenposition befindet; und
- Figur 9: einen vergrößerten Längsschnitt gemäß Figur 5, wobei sich der Mitneh- mer in seiner Ratschenposition befindet.

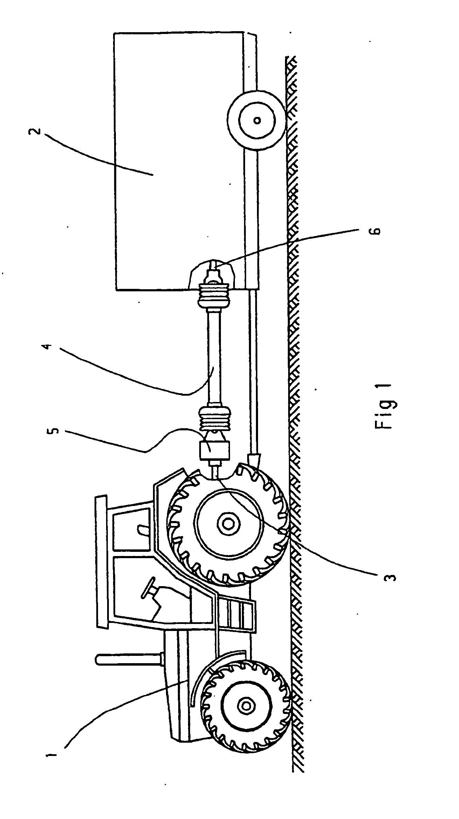

Aus Figur 1 ist ein Traktor 1 mit einem angehängten Gerät 2 ersichtlich. Eine Zapfwelle 3 des Traktors 1 dient dazu, mittels einer Gelenkwelle 4 Arbeitswerkzeuge des Geräts 2 anzutreiben, wobei die Arbeitswerkzeuge nicht dargestellt sind. Die Gelenkwelle 4 weist eine erfindungsgemäße Kupplung 5 auf, die zur Zapfwelle 3 hin angeordnet ist. Die Gelenkwelle 4 ist ferner geräteseitig mit einer Antriebswelle 6 des Geräts 2 verbunden. Die Kupplung 5 dient dazu, im Falle einer Überlast am Gerät 2 den Antrieb zu unterbrechen, so dass die Zapfwelle 3 weiter rotieren kann und kein Drehmoment auf die Gelenkwelle 4 übertragen wird. Der Aufbau der Kupplung 5 und deren Funktionsweise wird anhand der folgenden Figuren näher erläutert.

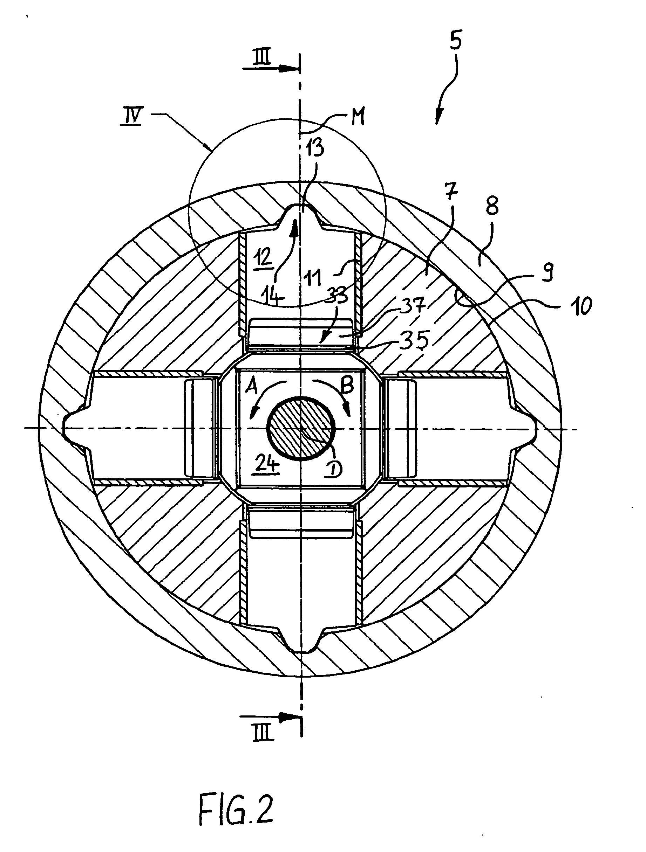

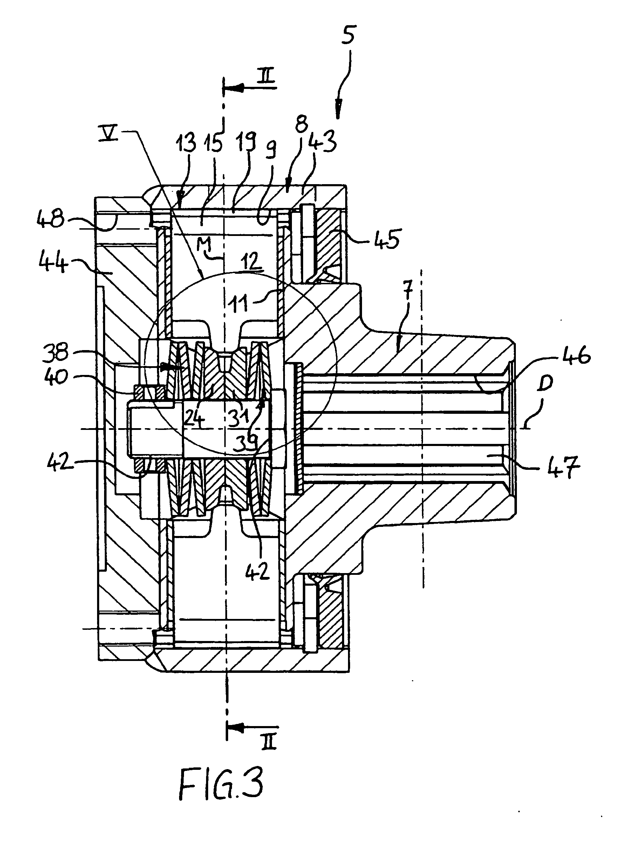

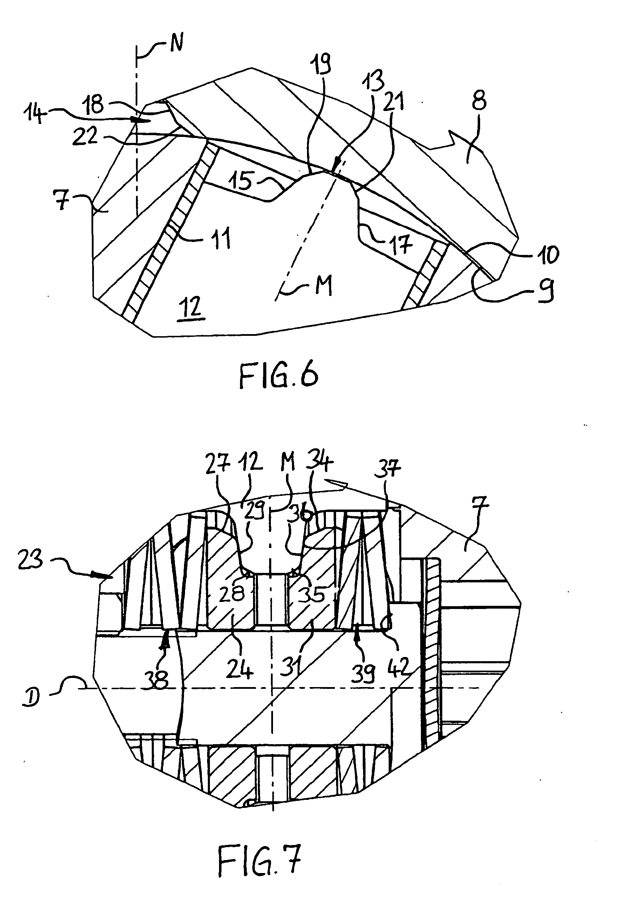

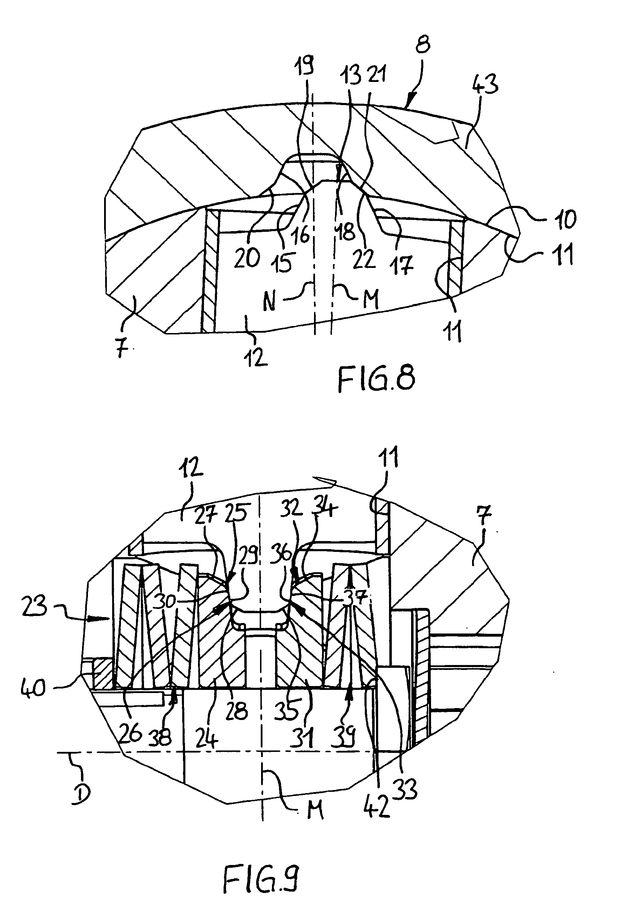

Die Figuren 2 bis 5 zeigen eine erfindungsgemäße Kupplung 5 mit Mitnehmern 12 in einer Drehmomentübertragungsposition. Die Figuren 6 und 7 zeigen die Mitnehmer 12 in einer Abschaltposition und die Figuren 8 und 9 in einer Ratschenposition. Die Figuren werden im folgenden zusammen beschrieben.

Die Kupplung 5 umfasst eine Kupplungsnabe 7, um die eine Kupplungshülse 8 drehbar angeordnet ist. Beide Bauteile, sowohl Kupplungsnabe 7 als auch Kupplungshülse 8, sind um eine zentrale Drehachse D drehbar. Die Kupplungshülse 8 weist eine Innenumfangsfläche 9 auf, mit der die Kupplungshülse 8 auf eine Außenumfangsfläche 10 der Kupplungsnabe 7 drehbar gelagert ist. Grundsätzlich sind jedoch auch andere Lagerungsmittel vorstellbar, so dass die Innenumfangsfläche 9 und die Außenumfangsfläche 10 grundsätzlich auch beabstandet zueinander angeordnet sein können.

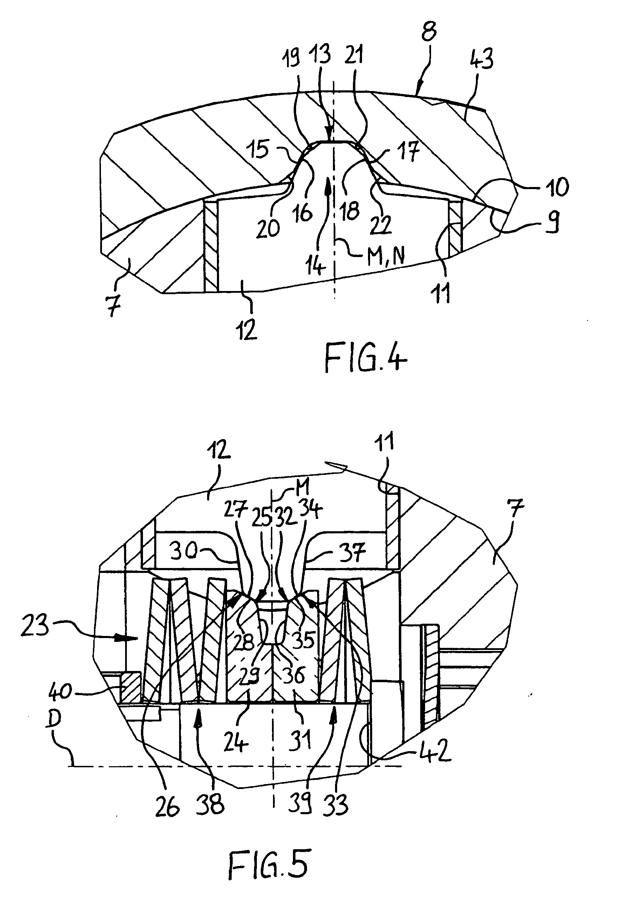

In der Kupplungsnabe 7 sind vier Radialbohrungen 11 vorgesehen, in denen Mitnehmer 12 entlang einer Mitnehmerachse M radial zwischen einer in Figur 4 dargestellten Drehmomentübertragungsposition und einer in Figur 6 dargestellten Abschaltposition verschiebbar geführt sind. Im vorliegenden Fall sind vier Radialbohrungen 11 mit jeweils einem Mitnehmer 12 dargestellt. Grundsätzlich kann jedoch auch eine andere Anzahl von Mitnehmern und Radialbohrungen vorgesehen sein. Im folgenden werden die Mitnehmer exemplarisch anhand einer der Mitnehmer 12 erläutert.

In der in Figur 1 dargestellten Drehmomentübertragungsposition greifen die Mitnehmer 12 mit Kopfabschnitten 13 in Ausnehmungen 14, die in die Innenumfangfläche 9 der Kupplungshülse 8 eingebracht sind, ein. Die Ausnehmungen 14 sind in Form von Nuten parallel zur Drehachse D der Kupplung 5 angeordnet. Zur Drehmomentübertragung zwischen der Kupplungsnabe 7 und der Kupplungshülse 8 in einer ersten Drehrichtung A weisen die Mitnehmer 12 jeweils am Kopfabschnitt 13 eine erste Sperrfläche 15 auf, die in der Drehmomentübertragungsposition des Mitnehmers 12 gegen eine erste Sperrgegenfläche 16 in Umfangsrichtung abgestützt ist. Somit kann Drehmoment von der Kupplungsnabe 7 über die Mitnehmer 12 auf die Kupplungshülse 8 übertragen werden. In der Drehmomentübertragungsposition sind die erste Sperrfläche 15 und die erste Sperrgegenfläche 16 parallel zueinander angeordnet, so dass sie plan aneinander liegen, um einen Flächenkontakt zu bilden. Die erste Sperrfläche 15 und die erste Sperrgegenfläche 16 schließen einen Winkel mit der Mitnehmerachse M ein, wobei sich der Winkel nach innen zur Drehachse D hin öffnet. Bei der Drehmomentübertragung zwischen der Kupplungsnabe 7 und der Kupplungshülse 8 ergibt sich somit eine Kraftkomponente in Normalrichtung bezogen auf die ersten Sperrgegenfläche 16 und eine Kraftkomponente in der Ebene der ersten Sperrgegenfläche 16. Bei Überschreiten eines vorbestimmten Grenzdrehmoments werden daher die Mitnehmer 12 auf Grund der winklig bzw. schräg angeordneten ersten Sperrfläche 15 und ersten Sperrgegenfläche 16 radial nach innen aus den Ausnehmungen 14 gedrückt, bis sie ihre in Figur 6 dargestellte Abschaltposition erreicht haben.

Zur Drehmomentübertragung zwischen der Kupplungsnabe 7 und der Kupplungshülse 8 in einer zweiten Drehrichtung B weisen die Mitnehmer 12 jeweils am Kopfabschnitt 13 eine zweite Sperrfläche 17 auf, die in der Drehmomentübertragungsposition des Mitnehmers 12 in Anlage zu einer zweiten Sperrgegenfläche 18 der Ausnehmung 14 ist. Hierbei sind die zweite Sperrfläche 17 und die zweite Sperrgegenfläche 18 ebenfalls parallel zueinander angeordnet, so dass ein Flächenkontakt gegeben ist. Die zweite Sperrfläche 17 und die zweite Sperrgegenfläche 18 schließen ebenfalls einen Winkel mit der Mitnehmerachse M ein, wobei sich dieser Winkel in Richtung zur Drehachse D, das heißt nach innen hin öffnet. Im vorliegenden Fall schließen die zweite Sperrfläche 17 und die zweite Sperrgegenfläche 18 einen Winkel mit der Mitnehmerachse ein, der genauso groß ist, wie der Winkel, den die erste Sperrfläche 15 und die erste Sperrgegenfläche 16 mit der Mitnehmerachse M einschließen. Grundsätzlich sind jedoch auch unterschiedlich große Winkel denkbar. Somit ergibt sich auch bei der zweiten Drehmomentübertragungsrichtung B, dass bei Überschreiten eines vorbestimmten Grenzdrehmoments der Mitnehmer 12 radial nach innen aus der Ausnehmung 14 gedrückt wird, bis er seine Abschaltposition erreicht.

In der in Figur 6 dargestellten Abschaltposition befinden sich die Mitnehmer 12 vollständig innerhalb der Kupplungshülse 8 beziehungsweise innerhalb der Innenumfangsfläche 9 der Kupplungshülse 8. Da die Mitnehmer 12 wie nachstehend noch erläutert wird, in Richtung zur Einnahme ihrer Drehmomentübertragungsposition mit Kraft beaufschlagt werden, sind die Mitnehmer 12 mit ihren Kopfabschnitten 13 gegen die Innenumfangsfläche 9 der Kupplungshülse 8 abgestützt.

Da die Mitnehmer 12 in der Abschaltposition der Mitnehmer 12 nicht mehr in die Ausnehmungen 14 eingreifen, kann sich die Kupplungsnabe 7 innerhalb der Kupplungshülse 8 frei drehen. Beim Passieren einer Ausnehmung 14 werden die Mitnehmer 12 zurück in die Ausnehmungen 14 gedrückt, da sie nach außen mit Kraft beaufschlagt sind. Um zu gewährleisten, dass die Mitnehmer 12 bei einer Relativdrehzahl der Kupplungsnabe 7 zur Kupplungshülse 8 über einer Widereinschaltdrehzahl nicht wieder vollständig in die Ausnehmungen 14 eingreifen können, sondern wieder aus den Ausnehmungen 14 herausgedrückt werden, weisen die Kopfabschnitte 13 jeweils eine erste Ratschenfläche 19 auf, die in einer Ratschenposition der Mitnehmer 12, wie in Figur 8 dargestellt, in Anlage zu einer ersten Ratschengegenfläche 20 der Ausnehmung 14 gelangen kann. In der Ratschenposition der Mitnehmer 12 befinden sich diese in einer Position zwischen der Drehmomentübertragungsposition und der Abschaltposition. Hierbei kann jede Position eines der Mitnehmer 12 als Ratschenposition bezeichnet werden, in der die erste Ratschenfläche 19 mit der ersten Ratschengegenfläche 20 in Anlage gelangen kann. Die erste Ratschenfläche 19 ist radial weiter außen angeordnet, als die erste Sperrfläche 15. Im vorliegenden Fall schließt sich die erste Ratschenfläche 19 radial an die erste Sperrfläche 15 an und ist am freien Ende des Kopfabschnitts 13 angeordnet. Die erste Ratschenfläche 19 und die erste Ratschengegenfläche 20 sind derart angeordnet, dass zwischen ihnen ein Flächenkontakt gegeben ist, wenn Sie zueinander in Anlage gelangen. Die erste Ratschenfläche 19 schließt mit der Mitnehmerachse M einen Winkel ein, der sich zur Drehachse D hin öffnet. Die erste Ratschengegenfläche 20 schließt ferner einen Winkel mit einer Mittelachse N ein, wobei die Mittelachse N auf der Mitnehmerachse M eines in die Ausnehmung 14 eingreifenden Mitnehmers 12 liegt. Die Winkel zwischen der ersten Ratschenfläche 19 und der Mitnehmerachse M und der ersten Ratschengegenfläche 20 und der Mittelachse N sind größer als die Winkel, die die erste Sperrfläche 15 und die erste Sperrgegenfläche 16 mit der Mitnehmerachse M eines in die Ausnehmung 14 eingreifenden Mitnehmers 12 einschließen.

Aufgrund des größeren Winkels zwischen der ersten Ratschenfläche 19 und der Mitnehmerachse M beziehungsweise der ersten Ratschengegenfläche 20 und der Mittelachse N ist gewährleistet, dass die Mitnehmer 12 bei Aufeinandertreffen der ersten Ratschenfläche 19 und der ersten Ratschengegenfläche 20 stärker nach innen gedrückt werden, so dass die Mitnehmer 20 wieder in ihre Abschaltposition überführt werden. Erst wenn die Relativdrehzahl zwischen der Kupplungsnabe 7 und der Kupplungshülse 8 eine Widereinschaltdrehzahl unterschreitet, haben die Mitnehmer 12 genügend Zeit, beim Passieren einer Ausnehmung 14 tiefer in diese einzugreifen, so dass nicht die erste Ratschenfläche 19 mit der ersten Ratschengegenfläche 20 in Anlage gelangt sondern die erste Sperrfläche 15 mit der ersten Sperrgegenfläche 16. Aufgrund des kleineren Winkels zwischen der ersten Sperrfläche 15 und der Mitnehmerachse M beziehungsweise der ersten Sperrgegenfläche 16 und der Mitnehmerachse M werden die Mitnehmer 12 nicht so stark von der Kupplungshülse 8 nach innen mit Kraft beaufschlagt, so dass die Kraft, mit denen die Mitnehmer in Richtung zu ihrer Drehmomentübertragungsposition mit Kraft beaufschlagt werden ausreicht, um diese in die Drehmomentübertragungsposition zu verschieben.

Darüber hinaus weisen die Mitnehmer 12 jeweils zweite Ratschenflächen 21 auf, die in einer Ratschenposition der Mitnehmer 12 gegen eine zweite Ratschengegenfläche 22 der Ausnehmungen 14 gelangen können, so dass auch in einer zweiten Drehrichtung B der Kupplungsnabe 7 relativ zur Kupplungshülse 8 gewährleistet ist, dass die Mitnehmer 12 aus ihrer Ratschenposition wieder in ihre Abschaltposition überführt werden, wenn die zweite Ratschenfläche 21 in Anlage zur zweiten Ratschenfläche 22 gelangt. Die zweite Ratschenfläche 21 schließt einen größeren Winkel mit der Mitnehmerachse M ein, als die zweite Sperrfläche 17. Ebenfalls schließt die zweite Ratschengegenfläche 22 einen größeren Winkel mit der Mittelachse N ein als die zweite Sperrgegenfläche 18, wobei die zweite Ratschfläche 21 und die zweite Ratschengegenfläche 22 in flächigen Kontakt zueinander gelangen. Hierbei können die Winkel genauso groß sein, wie diejenigen zwischen der ersten Ratschenfläche 19 beziehungsweise der ersten Ratschengegenfläche 20 und der Mitnehmerachse M.

Die Kupplung 5 weist Stellmittel 23 auf, um die Mitnehmer 12 in Richtung zu ihrer Drehmomentübertragungsposition mit Kraft zu beaufschlagen. Die Stellmittel 23 sind in Figur 5 bei einem Mitnehmer 12 in der Drehmomentübertragungsposition dargestellt. Die Stellmittel 23 umfassen ein erstes Stellelement in Form eines ersten Stellrings 24, der mit ersten Stellflächen 25 in Anlage zu ersten Stellgegenfläche 26 der Mitnehmer 12 mit Kraft beaufschlagt ist. In der insbesondere in Figur 5 dargestellten Drehmomentübertragungsposition der Mitnehmer 12 befindet sich ein erster Stellflächenabschnitt 27 jeder ersten Stellfläche 25 in Anlage zu einem ersten Stellgegenflächenabschnitt 28 der ersten Stellgegenflächen 26. In der in Figur 7 dargestellten Abschaltposition der Mitnehmer 12 befindet sich jeweils zweite Stellflächenabschnitte 29 in Anlage zu zweiten Stellgegenflächenabschnitten 30 der ersten Stellgegenflächen 26. Die ersten Stellflächenabschnitte 27 sind jeweils auf einer Ebene angeordnet, die mit der Drehachse D einen Winkel einschließen, der in Richtung zum ersten Stellring 24 geöffnet ist. Ebenso sind die zweiten Stellflächenabschnitte 29 jeweils auf Ebenen angeordnet, die mit der Drehachse D einen Winkel einschließen, der zum ersten Stellring 24 hin geöffnet sind, wobei dieser Winkel kleiner ist als der Winkel, der durch die Ebenen der ersten Stellflächenabschnitte 28 und der Drehachse D eingeschlossen werden.

Die ersten Stellflächenabschnitte 27 und die ersten Stellgegenflächenabschnitte 28 sind derart zueinander angeordnet, dass Flächenkontakt zwischen ihnen gegeben ist. Ebenso sind die zweiten Stellflächenabschnitte 29 und die zweiten Stellgegenflächen 30 derart zueinander angeordnet, dass Flächenkontakt zu diesen gegeben ist.

Durch diese Ausgestaltung des ersten Stellrings 24 und der Mitnehmer 12 ist gewährleistet, dass durch Kraftbeaufschlagung des ersten Stellrings 24 in Richtung auf die Mitnehmer 12 zu diese in Richtung zur Drehmomentübertragungsposition beaufschlagt sind. Durch die unterschiedlich winklige Anordnung der ersten Stelltlächenabschnitte 27 und der zweiten Stettflächenabschnitte 29 ist die Kraft, mit der die Mitnehmer 12 in Richtung zur Drehmomentübertragungsposition beaufschlagt werden, ausgehend von der Abschaltposition zunächst kleiner und wird in Richtung zur Drehmomentübertragungsposition größer. Somit ist gewährleistet, dass nach dem Abschalten der Kupplung aufgrund des Überschreitens eines Grenzdrehmoments das Drehmoment zum Widereinschalten deutlich geringer sein muss als das Grenzdrehmoment. Dadurch ist zur Sicherheitszwecken garantiert, dass ein automatisches Widereinschalten der Kupplung nur bei geringen Drehmomenten deutlich unterhalb des Grenzdrehmoments möglich ist.

Ferner sind nicht nur in der Abschaltposition der Mitnehmer die zweiten Stellflächenabschnitte 29 in Anlage zu den zweiten Stellgegenflächenabschnitten 30 sondern auch in der Ratschenposition der Mitnehmer 12, so dass gewährleistet wird, dass die Mitnehmer in ihrer Ratschenposition mit einer geringeren Kraft nach außen gedrängt werden als in der Drehmomentübertragungsposition. Somit sind die Kräfte, die zwischen Mitnehmer 12 und Kupplungshülse 8 beziehungsweise zwischen den Ratschenflächen 19, 21 und den Ratschengegenflächen 20, 22 wirken, geringer, um den Verschleiß zu minimieren. Darüber hinaus ist in der Drehmomentübertragungsposition gewährleistet, dass die Mitnehmer 12 sicher in den Ausnehmungen 14 gehalten sind.

Auf derjenigen Seite der Mitnehmer 12, die von dem ersten Schaltring 24 abgewandt ist, ist ein zweites Stellelement in Form eines zweiten Stellrings vorgesehen. Der zweite Stellring 31 weist zweite Stellflächen 32 auf, die jeweils gegen zweite Stellgegenflächen 33 der Mitnehmer 12 mit Kraft beaufschlagt sind. Die zweiten Stellflächen 32 weisen wie die ersten Stellflächen 25 erste Stellflächenabschnitte 34 auf, die in der Drehmomentübertragungsposition der Mitnehmer 12 in Anlage zu ersten Stellgegenflächenabschnitten 35 der zweiten Stellgegenflächen 32 in Flächenkontakt sind. Ferner weisen die zweiten Stellflächen 32 zweite Stellflächenabschnitte 36 auf, die in der Abschaltposition der Mitnehmer 12 und in der Ratschenposition der Mitnehmer 12 in Flächenkontakt zu zweiten Stellgegenabschnitten 37 der zweiten Stellgegenflächen 26 gehalten sind.

Der erste Stellring 24 ist durch ein erstes Tellerfederpaket 38 in Richtung zu den Mitnehmern 12 mit Kraft beaufschlagt. Der zweite Stellring 31 ist mittels eines zweiten Tellerfederpakets 39 in Richtung zu den Mitnehmern 12 mit Kraft beaufschlagt. Das erste Tellerfederpaket 38 stützt sich einerseits gegen den ersten Stellring 24 und andererseits gegen eine Schufterfläche 42 der Kupplungsnabe 7 axial ab. Das zweite Tellerfederpaket 39 stützt sich einerseits gegen den zweiten Stellring 31 und andererseits gegen eine Mutter 40 axial ab, wobei die Mutter 40 auf ein Außengewinde 41 der Kupplungsnabe 7 aufgeschraubt ist. Durch Verstellen der Mutter 40 auf dem Außengewinde 41 lässt sich die Vorspannung, mit der die Stellringe 24, 31 und somit die Mitnehmer 12 mit Kraft beaufschlagt werden, einstellen.

Die Kupplungshülse 8 umfasst ein Gehäuse 43 sowie einen Deckel 44, die miteinander verschweißt sind. Zur Abdichtung des Innenraums der Kupplung 5 ist ein Dichtring 45 vorgesehen, der zwischen dem Gehäuse 43 und der Kupplungsnabe 7 vorgesehen ist. Zum Verbinden der Kupplungsnabe 7 mit einem Bauteil eines Antriebsstrangs weist dieser eine zentrale Axialbohrung 46 auf, in welcher eine Längsverzahnung 47 zum drehfesten Verbinden mit einem Wellenzapfen vorgesehen ist. Der Deckel 44 lässt sich über Gewindebohrungen 48, die in diesen eingebracht sind, mit einem weiteren Bauteil eines Antriebsstrangs verbinden.

### Bezugszeichenliste

- 1: Traktor
- 2: Gerät
- 3: Zapfwelle
- 4: Gelenkwelle
- 5: Kupplung
- 6: Antriebswelle
- 7: Kupplungsnabe
- 8: Kupptungshülse
- 9: Innenumfangsfläche
- 10: Außenumfangsfläche
- 11: Radialbohrung
- 12: Mitnehmer
- 13: Kopfabschnitt
- 14: Ausnehmung
- 15: erste Sperrfläche
- 16: erste Sperrgegenfläche
- 17: zweite Sperrfläche
- 18: zweite Sperrgegenfläche
- 19: erste Ratschenfläche
- 20: erste Ratschengegenfläche
- 21: zweite Ratschenfläche
- 22: zweite Ratschengegenfläche
- 23: Stellmittel
- 24: erster Stellring (erstes Stellelement)
- 25: erste Stellfläche
- 26: erste Stellgegenfläche
- 27: erster Stellflächenabschnitt (der ersten Stellfläche)
- 28: erster Stellgegenflächenabschnitt (der ersten Stellgegenfläche)
- 29: zweiter Stellflächenabschnitt (der ersten Stellfläche)
- 30: zweiter Stellgegenflächenabschnitt (der ersten Stellgegenfläche)
- 31: zweiter Stellring (zweites Stellelement)
- 32: zweite Stellfläche
- 33: zweite Stellgegenfläche
- 34: erster Stellflächenabschnitt (der zweiten Stellfläche)
- 35: erster Stellgegenflächenabschnitt (der zweiten Stellgegenfläche)
- 36: zweiter Stellflächenabschnitt (der zweiten Stellfläche)
- 37: zweiter Stellgegenflächenabschnitt (der zweiten Stellgegenfläche)
- 38: erstes Tellerfederpaket
- 39: zweites Tellerfederpaket
- 40: Mutter
- 41: Außengewinde
- 42: Schulterfläche
- 43: Gehäuse
- 44: Deckel
- 45: Dichtring
- 46: Axialbohrung
- 47: Längsverzahnung
- 48: Gewindebohrung

## Patentansprüche

1. Kupplung (5) zur Drehmomentbegrenzung, insbesondere im Antriebsstrang zum Antreiben landwirtschaftlicher Geräte, umfassend
eine Kupplungsnabe (7),
eine Kupplungshülse (8), die um die Kupplungsnabe (7) drehbar angeordnet ist und eine Innenumfangsfläche (9) aufweist, wobei die Kupplungsnabe (7) und die Kupplungshülse (8) um eine Drehachse (D) drehbar sind,
Mitnehmer (12), die in der Kupplungsnabe (7) jeweils entlang einer Mitnehmerachse (M) zwischen einer Drehmomentübertragungsposition und einer Abschaltposition quer zur Drehachse (D) verstellbar sind, und die jeweils eine erste Sperrfläche (15) und eine zweite Sperrfläche (17) aufweisen, Ausnehmungen (14) in der Innenumfangsfläche (9) der Kupplungshülse (8), in welche die Mitnehmer (12) in ihrer Drehmomentübertragungsposition eingreifen,und die jeweils eine erste Sperrgegenfläche (16) und eine zweite Sperrgegenfläche (18) aufweisen sowie
Stellmittel (23), die die Mitnehmer (12) zur Einnahme ihrer Drehmomentübertragungsposition mit Kraft beaufschlagen wobei in der Drehmomentübertragungsposition der Mitnehmer (12) zur Drehmomentübertragung in einer ersten Drehrichtung jeweils die erste Sperrfläche (15) gegen die erste Sperrgegenfläche (16) und zur Drehmomentübertragung in einer zweiten Drehrichtung jeweils die zweite Sperrfläche (17) gegen die zweite Sperrgegenfläche (18) abgestützt ist,
**dadurch gekennzeichnet,**
**dass** die Mitnehmer (12) jeweils zwei Ratschenflächen (19, 21) und die Ausnehmungen (14) zwei Ratschengegenflächen (20, 22) aufweisen, wobei bei abgeschalteter Kupplung (5) in jeder Drehrichtung der Kupplungsnabe (7) relativ zur Kupplungshülse (8) mit einer Relativdrehzahl über einer Wiedereinschaltdrehzahl jeweils eine Ratschenfläche (19, 21) und eine Ratschengegenfläche (20, 22) derart zusammenwirken, dass ein Überführen der Mitnehmer (12) in die Drehmomentübertragungsposition verhindert wird,
**dass** die Ratschenflächen (19, 21) jeweils eines Mitnehmers (12) in einem größeren radialen Abstand zur Drehachse (D) angeordnet sind als die Sperrflächen (15, 17),
**dass** die Ratschenflächen (19, 21) einen Winkel von 35° bis 55° mit der Mitnehmerachse (M) einschließen und
**dass** die Ratschengegenflächen (20, 22) einen Winkel von 35° bis 55° mit einer Mittelachse (N) der jeweiligen Ausnehmung (14) einschließen.

2. Kupplung nach Anspruch 1,
**dadurch gekennzeichnet,**
**dass** die Mitnehmer (12) jeweils eine erste Ratschenfläche (19) und die Ausnehmungen (14) jeweils eine erste Ratschengegenfläche (20) aufweisen, die bei abgeschalteter Kupplung (5) in einer ersten Drehrichtung der Kupplungsnabe (7) relativ zur Kupplungshülse (8) mit einer Relativdrehzahl über einer Wiedereinschaltdrehzahl derart zusammenwirken, dass ein Überführen des jeweiligen Mitnehmers (12) in die Drehmomentübertragungsposition verhindert wird, und
**dass** die Mitnehmer (12) jeweils eine zweite Ratschenfläche (21) und die Ausnehmungen (14) jeweils eine zweite Ratschengegenfläche (22) aufweisen, die bei abgeschalteter Kupplung (5) in einer zweiten Drehrichtung der Kupplungsnabe (7) relativ zur Kupplungshülse (8) mit einer Relativdrehzahl über einer Wiedereinschaltdrehzahl derart zusammenwirken, dass ein Überführen des jeweiligen Mitnehmers (12) in die Drehmomentübertragungsposition verhindert wird.

3. Kupplung nach Anspruch 2,
**dadurch gekennzeichnet,**
**dass** in einer Ratschenposition der Mitnehmer (12), die sich zwischen der Drehmomentübertragungsposition und der Abschaltposition befindet, in der ersten Drehrichtung jeweils die erste Ratschenfläche (19) gegen die erste Ratschengegenfläche (20) der jeweiligen Ausnehmung (14) und in der zweiten Drehrichtung jeweils die zweite Ratschenfläche (21) gegen die zweite Ratschengegenfläche (22) in Anlage gelangen.

4. Kupplung nach einem der Ansprüche 2 oder 3,
**dadurch gekennzeichnet,**
**dass** die erste Ratschenfläche (19) und die erste Sperrfläche (15) der Mitnehmer (12) jeweils winklig zueinander angeordnet sind, und
**dass** die zweite Ratschenfläche (21) und die zweite Sperrfläche (17) der Mitnehmer (12) jeweils winklig zueinander angeordnet sind.

5. Kupplung nach einem der Ansprüche 2 bis 4,
**dadurch gekennzeichnet,**
**dass** die erste Sperrfläche (15) und die erste Ratschenfläche (19) jeweils eines Mitnehmers in unterschiedlichen Winkeln zur jeweiligen Mitnehmerachse (M) angeordnet sind und
**dass** die zweite Sperrfläche (17) und die zweite Ratschenfläche (21) jeweils eines Mitnehmers (12) in unterschiedlichen Winkeln zur jeweiligen Mitnehmerachse (M) angeordnet sind.

6. Kupplung nach einem der Ansprüche 1 bis 5,
**dadurch gekennzeichnet,**
**dass** die Ratschenflächen (19, 21) jeweils eines Mitnehmers (12) einen größeren Winkel mit der Mitnehmerachse (M) einschließen als die Sperrflächen (15, 17).

7. Kupplung nach einem der Ansprüche 1 bis 6,
**dadurch gekennzeichnet,**
**dass** die Sperrflächen (15, 17) und Sperrgegenflächen (16, 18) derart gestaltet sind, dass in der Drehmomentübertragungsposition der Mitnehmer (12) jeweils eine der Sperrflächen (15, 17) flächig in Anlage zu einer der Sperrgegenflächen (16, 18) angeordnet ist.

8. Kupplung nach einem der Ansprüche 1 bis 7,
**dadurch gekennzeichnet,**
**dass** die Ratschenflächen (19, 21) und Ratschengegenflächen (20, 22) derart gestaltet sind, dass jeweils eine der Ratschenfläche (19, 21) mit einer der Ratschengegenfläche (20, 22) flächig in Anlage gelangt.

9. Kupplung nach einem der Ansprüche 1 bis 8,
**dadurch gekennzeichnet,**
**dass** die Stellmittel (23) mindestens ein Stellelement (24, 31) umfassen, das mit einer Stellfläche (25, 32) axial gegen eine Stellgegenfläche (26, 33) zumindest eines der Mitnehmer (12) mit Kraft beaufschlagt ist und den mindestens einen Mitnehmer (12) zur Einnahme seiner Drehmomentübertragungsposition beaufschlagt.

10. Kupplung nach Anspruch 9,
**dadurch gekennzeichnet,**
**dass** die Stellmittel (23) mindestens ein Stellelement (24, 31) umfassen, das mit jeweils einer Stellfläche (25, 32) gegen sämtliche Mitnehmer (12) mit Kraft beaufschlagt ist.

11. Kupplung nach einem der Ansprüche 9 oder 10,
**dadurch gekennzeichnet,**
**dass** die Stellflächen (24, 31) jeweils einen ersten Stellflächenabschnitt (27, 34) aufweisen, der gegen einen ersten Stellgegenflächenabschnitt (28, 35) der Stellgegenfläche (26, 33) abgestützt ist, wenn sich der jeweilige Mitnehmer (12) in seiner Drehmomentübertragungsposition befindet.

12. Kupplung nach Anspruch 11,
**dadurch gekennzeichnet,**
**dass** die Stellflächen (24, 31) jeweils einen zweiten Stellflächenabschnitt (29, 36) aufweisen, der gegen einen zweiten Stellgegenflächenabschnitt (30, 37) der Stellgegenfläche (26, 33) abgestützt ist, wenn sich der jeweilige Mitnehmer (12) in seiner Abschaltposition oder in seiner Ratschenposition befindet.

13. Kupplung nach Anspruch 12,
**dadurch gekennzeichnet,**
**dass** der erste Stellgegenflächenabschnitt (28, 35) jeweils eines Mitnehmers (12) einen größeren Winkel zu der jeweiligen Mitnehmerachse (M) einschließt als der zweite Stellgegenflächenabschnitt (30, 37).

## Claims

1. Coupling (5) for limiting torque, especially in the drive line for driving agricultural implements, comprising
a coupling hub (7),
a coupling sleeve (8), which is rotatably arranged around the coupling hub (7) and has an inner circumferential face (9), wherein the coupling hub (7) and the coupling sleeve (8) are rotatable around a rotational axis (D),
drivers (12), which are each displaceable in the coupling hub (7) along a driver axis (M) transversally to the rotational axis (D) between a torque transmitting position and a switching-off position and which, respectively, have a first locking face (15) and a second locking face (17),
recesses (14) in the inner circumferential face (9) of the coupling sleeve (8), in which the drivers (12) engage in their torque transmitting position and which have, respectively, a first counter locking face (16) and a second counter locking face (18), as well as
setting means (23), which act with a force on the drivers (12) to take up their torque transmitting position, wherein in the torque transmitting position of the drivers (12) for the torque transmission in a first rotational direction, respectively, the first locking face (15) is supported on the first counter locking face (16) and for the torque transmission in a second rotational direction the second locking face (17) is supported on the second counter locking face (18), **characterised in**
**that** the drivers (12) each have two ratchet faces (19, 21) and the recesses (14) each have two counter ratchet faces (20, 22), wherein, when the coupling (5) is switched off, in each rotational direction of the coupling hub (7) relative to the coupling sleeve (8) at a relative rotational speed above the re-switching-on rotational speed, a ratchet face (19, 21) interacts with a counter ratchet face (20, 22) such, that a displacement of the drivers (12) into the torque transmitting position is prevented,
**that** the ratchet faces (19, 21) of respectively a driver (12) are arranged at a larger radial distance to the rotational axis (D) than the locking faces (15, 17), that the ratchet faces (19, 21) enclose an angle of 35° up to 55° with the driver axis (M) and
**that** the counter ratchet faces (20, 22) enclose an angle of 35° up to 55° with a centre axis (N) of the respective recess (14).

2. Coupling according to claim 1,
**characterised in**
**that** the drivers (12) have, respectively, one first ratchet face (19) and the recesses (14) have, respectively, one first counter ratchet face (20), which, when the coupling is switched off, in a first rotational direction of the coupling hub (7) relative to the coupling sleeve (8) at a relative rotational speed above a re-switching-on rotational speed interact such with each other, that a displacement of the respective driver (12) into the torque transmitting position is prevented, and
**that** the drivers (12) have, respectively, one second ratchet face (21) and the recesses (14) have, respectively, one second counter ratchet face (22), which, when the coupling (5) is switched off, in a second rotational direction of the coupling hub (7) relative to the coupling sleeve (8) at a relative rotational speed above the re-switching-on rotational speed, interact such with each other, that a displacement of the respective driver (12) into the torque transmitting position is prevented.

3. Coupling according to claim 2,
**characterised in**
**that** in a ratchet position of the drivers (12), which is arranged between the torque transmitting position and the switching-off position, in the first rotational direction, respectively, the first ratchet face (19) abuts the first counter ratchet face (20) of the respective recess (14) and in the second rotational direction, the second ratchet face (21) abuts the second counter ratchet face (22).

4. Coupling according to one of claims 2 or 3,
**characterised in**
**that** the first ratchet face (19) and the first locking face (15) of the drivers (12) are, respectively, arranged at an angle to each other, and
**that** the second ratchet face (21) and the second locking face (17) of the drivers (12) are, respectively, arranged at an angle to each other.

5. Coupling according to one of claims 2 to 4,
**characterised in**
**that** the first locking face (15) and the first ratchet face (19) of a respective driver are arranged at different angles to the respective driver axis (M) and that the second locking face (17) and the second ratchet face (21) of a respective driver (12) are arranged at different angles to the respective driver axis (M).

6. Coupling according to one of claims 1 to 5,
**characterised in**
**that** the ratchet faces (19, 21) of a respective driver (12) enclose a larger angle with the driver axis (M) than the locking faces (15, 17).

7. Coupling according to one of claims 1 to 6,
**characterised in**
**that** the locking faces (15, 17) and the counter locking faces (16, 18) are formed such, that in the torque transmitting position of the drivers (12), respectively, one of the locking faces (15, 17) abuts in a surface to surface contact one of the counter locking faces (16, 18).

8. Coupling according to one of claims 1 to 7,
**characterised in**
**that** the ratchet faces (19, 21) and the counter ratchet faces (20, 22) are formed such, that respectively one of the ratchet faces (19, 21) abuts in a surface to surface contact one of the counter ratchet faces (20, 22).

9. Coupling according to one of claims 1 to 8,
**characterised in**
**that** the setting means (23) comprise at least one setting element (24, 31), which is acted upon by a setting face (25, 32) with a force axially against a counter setting face (26, 33) of at least one of the drivers (12) and which acts upon the at least one driver (12) to take up its torque transmitting position.

10. Coupling according to claim 9,
**characterised in**
**that** the setting means (23) comprise at least one setting element (24, 31), which with respectively one setting face (25, 32) acts with a force on all drivers (12).

11. Coupling according to one of claims 9 or 10,
**characterised in**
**that** the setting faces (24, 31) have, respectively, one first setting face portion (27, 34), which is supported on a first counter setting face portion (28, 35) of the counter setting face (26, 33), when the respective driver (12) is in its torque transmitting position.

12. Coupling according to claim 11,
**characterised in**
**that** the setting faces (24, 31) have, respectively, one second setting face portion (29, 36), which is supported on a second counter setting face portion (30, 37) of the counter setting face (26, 33), when the respective driver (12) is in its switching-off position or in its ratchet position.

13. Coupling according to claim 12,
**characterised in**
**that** the first counter setting face portion (28, 35) respectively of one driver (12) encloses a larger angle with the respective driver axis (M) than the second counter setting face portion (30, 37).

## Revendications

1. Accouplement (5) pour la limitation de couple, en particulier dans la branche cinématique pour l'entraînement d'appareils agricoles, comprenant
un moyeu d'accouplement (7),
un manchon d'accouplement (8), qui est disposé de façon rotative autour du moyeu d'accouplement (7) et présente une surface périphérique intérieure (9), le moyeu d'accouplement (7) et le manchon d'accouplement (8) pouvant tourner autour d'un axe de rotation (D),
des entraîneurs (12), qui peuvent être déplacés dans le moyeu d'accouplement (7) à chaque fois le long d'un axe d'entraîneur (M) entre une position de transmission de couple et une position de déconnexion transversalement à l'axe de rotation (D), et qui présentent à chaque fois une première surface de blocage (15) et une seconde surface de blocage (17),
des évidements (14) dans la surface périphérique intérieure (9) du manchon d'accouplement (8), dans lesquels les entraîneurs (12) s'engagent dans leur position de transmission de couple et lesquels présentent à chaque fois une première contre-surface de blocage (16) et une seconde contre-surface de blocage (18), ainsi que
des moyens de positionnement (23), qui sollicitent les entraîneurs (12) avec de la force pour occuper leur position de transmission de couple où la première surface de blocage (15) étant soutenue contre la première contre-surface de blocage (16) pour la transmission de couple dans un premier sens de rotation et la seconde surface de blocage (17) étant soutenue à chaque fois contre la seconde contre-surface de blocage (18) pour la transmission de couple dans un second sens de rotation, lorsque les entraîneurs (12) sont dans la position de transmission de couple,
**caractérisé**
**en ce que** les entraîneurs (12) présentent à chaque fois deux surfaces à cliquet (19, 21) et les évidements (14) deux contre-surfaces à cliquet (20, 22), à chaque fois une surface à cliquet (19, 21) et une contre-surface à cliquet (20, 22) coopérant, en cas d'accouplement (5) déconnecté dans chaque sens de rotation du moyeu d'accouplement (7) par rapport au manchon d'accouplement (8), avec un régime relatif au moyen d'un régime de réenclenchement, de telle sorte qu'un transfert des entraîneurs (12) dans la position de transmission de couple est empêché,
**en ce que** les surfaces à cliquet (19, 21) de respectivement un entraîneur (12) sont disposées à une distance radiale à l'axe de rotation (D) plus grande que les surfaces de blocage (15, 17),
**en ce que** les surfaces à cliquet (19, 21) forment un angle de 35° à 55° avec l'axe d'entraîneur (M) et
**en ce que** les contre-surfaces à cliquet (20, 22) forment un angle de 35° à 55° avec un axe médian (N) de l'évidement (14) respectif.

2. Accouplement selon la revendication 1,
**caractérisé en ce que**
les entraîneurs (12) présentent à chaque fois une première surface à cliquet (19) et les évidements (14) à chaque fois une première contre-surface à cliquet (20), qui, lorsque l'accouplement (5) est déconnecté, coopèrent dans un premier sens de rotation du moyeu d'accouplement (7) par rapport au manchon d'accouplement (8) avec un régime relatif au moyen d'un régime de réenclenchement, de telle sorte qu'un transfert de l'entraîneur (12) respectif dans la position de transmission de couple est empêché, et
**en ce que** les entraîneurs (12) présentent à chaque fois une seconde surface à cliquet (21) et les évidements (14) à chaque fois une seconde contre-surface à cliquet (22), qui, lorsque l'accouplement (5) est déconnecté, coopèrent dans un second sens de rotation du moyeu d'accouplement (7) par rapport au manchon d'accouplement (8) avec un régime relatif au moyen d'un régime de réenclenchement, de telle sorte qu'un transfert de l'entraîneur (12) respectif dans la position de transmission de couple est empêché.

3. Accouplement selon la revendication 2,
**caractérisé**
**en ce que**, lorsque les entraîneurs (12) sont dans une position de cliquet, qui se trouve entre la position de transmission de couple et la position de déconnexion, à chaque fois la première surface à cliquet (19) vient en appui contre la première contre-surface à cliquet (20) de l'évidement (14) respectif dans le premier sens de rotation et à chaque fois la seconde surface à cliquet (21) vient en appui contre la seconde surface à cliquet (22) dans le second sens de rotation.

4. Accouplement selon l'une quelconque des revendications 2 ou 3,
**caractérisé en ce que**
la première surface à cliquet (19) et la première surface de blocage (15) des entraîneurs (12) sont disposées à chaque fois en formant un angle l'une par rapport à l'autre, et
**en ce que** la seconde surface à cliquet (21) et la seconde surface de blocage (17) des entraîneurs (12) sont disposées à chaque fois en formant un angle l'une par rapport à l'autre.

5. Accouplement selon l'une quelconque des revendications 2 à 4,
**caractérisé en ce que**
la première surface de blocage (15) et la première surface à cliquet (19) respectivement d'un entraîneur sont disposées dans des angles différents par rapport à l'axe d'entraîneur (M) respectif, et
**en ce que** la seconde surface de blocage (17) et la seconde surface à cliquet (21) respectivement d'un entraîneur (12) sont disposées dans des angles différents par rapport à l'axe d'entraîneur (M) respectif.

6. Accouplement selon l'une quelconque des revendications 1 à 5,
**caractérisé en ce que**
les surfaces à cliquet (19, 21) de respectivement un entraîneur (12) forment avec l'axe d'entraîneur (M) un angle plus grand que les surfaces de blocage (15, 17).

7. Accouplement selon l'une quelconque des revendications 1 à 6,
**caractérisé en ce que**
les surfaces de blocage (15, 17) et contre-surfaces de blocage (16, 18) sont conçues de telle sorte que, lorsque les entraîneurs (12) sont dans la position de transmission de couple, à chaque fois l'une des surfaces de blocage (15, 17) est disposée à plat en appui sur l'une des contre-surfaces de blocage (16, 18).

8. Accouplement selon l'une quelconque des revendications 1 à 7,
**caractérisé en ce que**
les surfaces à cliquet (19, 21) et contre-surfaces à cliquet (20, 22) sont conçues de telle sorte qu'à chaque fois l'une des surfaces à cliquet (19, 21) vient à plat en appui avec l'une des contre-surfaces à cliquet (20, 22).

9. Accouplement selon l'une quelconque des revendications 1 à 8,
**caractérisé en ce que**
les moyens de positionnement (23) comprennent au moins un élément de positionnement (24, 31), qui est sollicité avec de la force avec une surface de positionnement (25, 32) axialement contre une contre-surface de positionnement (26, 33) d'au moins l'un des entraîneurs (12) et sollicite le au moins un entraîneur (12) pour occuper une position de transmission de couple.

10. Accouplement selon la revendication 9,
**caractérisé en ce que**
les moyens de positionnement (23) comprennent au moins un élément de positionnement (24, 31), qui est sollicité avec de la force avec respectivement une surface de positionnement (25, 32) contre tous les entraîneurs (12).

11. Accouplement selon l'une quelconque des revendications 9 ou 10,
**caractérisé en ce que**
les surfaces de positionnement (24, 31) présentent à chaque fois un premier tronçon de surface de positionnement (27, 34), qui est soutenu contre un premier tronçon (28, 35) de la contre-surface de positionnement (26, 33), lorsque l'entraîneur (12) respectif se trouve dans sa position de transmission de couple.

12. Accouplement selon la revendication 11,
**caractérisé en ce que**
les surfaces de positionnement (24, 31) présentent à chaque fois un second tronçon de surface de positionnement (29, 36), qui est soutenu contre un second tronçon (30, 37) de la contre-surface de positionnement (26, 33), lorsque l'entraîneur (12) respectif se trouve dans sa position de déconnexion ou dans sa position de cliquet.

13. Accouplement selon la revendication 12,
**caractérisé en ce que**
le premier tronçon de contre-surface de positionnement (28, 35) de respectivement un entraîneur (12) forme avec l'axe d'entraîneur (M) respectif un angle supérieur au second tronçon de contre-surface de positionnement (30, 37).
